# FASCICULE DE BREVET EUROPEEN

(11) **EP 2 880 471 B1**
(45) Date de publication et mention de la délivrance du brevet: **29.09.2021**
(21) Numéro de dépôt: 13758939.6
(22) Date de dépôt: 06.08.2013
(51) Int. Cl.: G01V 99/00

(54) **PROCEDE DE DETERMINATION DE TRAJECTOIRES DE CHENAUX**
VERFAHREN ZUR BESTIMMUNG VON KANÄLETRAJEKTORIEN
METHOD TO DETERMINE CHANNELS TRAJECTORIES

(30) Priorité: 06.08.2012 FR 1257649
(43) Date de publication de la demande: 10.06.2015
(73) Titulaire: TOTAL SE, 92400 Courbevoie (FR)
(72) Inventeur: MASSONNAT, Gérard, F-64000 Pau (FR)
(74) Mandataire: Plasseraud IP
(86) Numéro de dépôt international: PCT/FR2013/051891
(87) Numéro de publication internationale: WO 2014/023908

(56) Documents cités:
- WO-A2-2012/072923
- None

## Description

La présente invention concerne le domaine de la modélisation de sous-sol. On s'intéresse particulièrement à la modélisation d'anciens chenaux pour la reconstruction des faciès sédimentaires du sous-sol.

La détermination des faciès sédimentaires dans un sous-sol est souvent une étape nécessaire à la détermination de la capacité de ce sous-sol à piéger des hydrocarbures.

Un faciès sert à qualifier un étage litho-stratigraphique, une roche ou un minéral. Par exemple, on peut parler d'un faciès isométrique (minéraux/roches présentant des dimensions sensiblement égales suivant les trois directions de l'espace comme la galène ou le grenat), d'un faciès allongé (minéraux/roches présentant des cristaux développés suivant une seule direction), d'un faciès tabulaire (minéraux/roches présentant des cristaux développés suivant deux directions de l'espace), etc.

Pour déterminer ces faciès, il peut être utile de réaliser des forages à différents points d'intérêt. Ainsi, il est possible à partir des carottes de forages de déterminer les différents faciès verticalement en fonction de la profondeur.

Néanmoins, ces forages étant nécessairement ponctuels, les faciès en dehors de ces forages restent inconnus. Certaines méthodes géostatistiques proposent de combler la lacune de connaissance entre les puits de forages en interpolant le faciès entre les puits en fonction de la variance et en prenant en compte la distribution spatiale de ces faciès.

De telles méthodes ne sont pas exemptes de défauts.

En effet, ces méthodes ne prennent pas en compte les données en provenance de sources sismiques alors que celles-ci peuvent donner des informations utiles quant aux orientations des anciens faciès sédimentaires dans le domaine étudié, par exemple, l'orientation des anciens chenaux.

De plus, ces méthodes ne prennent pas en compte l'information selon laquelle certaines couches lithographiques de puits différents sont connectées entre elles.

Il y a ainsi un besoin pour améliorer les méthodes existantes de modélisation de sous-sol afin de prendre en compte certaines de ces informations.

Le document WO 2012/072923 A2 divulgue un procédé de simulation de formation géologique d'une zone fluviale. Ce document divulgue un critère d'arrêt de simulation basé sur la ressemblance par rapport à des données d'observation.

La présente invention vient donc améliorer la situation.

A cet effet, la présente invention propose la détermination de trajectoires de chenaux en prenant en compte certaines contraintes de cheminement constaté sur le terrain.

La présente invention vise alors un procédé mis en œuvre par ordinateur pour la modélisation de chenaux. A partir d'un modèle comportant au moins un espace de points, lesdits points ayant des coordonnées dans ledit espace, une contrainte d'entrée comportant au moins un premier point dudit espace, au moins une contrainte de trajectoire comportant au moins un deuxième point dans ledit espace non compris dans la contrainte d'entrée, et une composante directionnelle locale étant fonction des coordonnées dans l'espace, ladite composante directionnelle prenant en compte les différences de hauteur du terrain réel, le procédé comporte les étapes :
- déterminer un troisième point parmi l'au moins un premier point de la contrainte d'entrée, ledit troisième point étant pris comme point courant,
- initialiser une composante trigonométrique et un numéro d'itération, ladite composante trigonométrique étant au moins fonction dudit numéro d'itération,
- déterminer au moins une trajectoire dans ledit espace, ladite détermination est réalisée par itération des sous-étapes suivantes :
   a/ tirage d'un nombre aléatoire et incrémentation du numéro d'itération ;
   b/ détermination d'une déviation en fonction de la composante trigonométrique et du nombre aléatoire tiré ;
   c/ détermination d'un quatrième point de l'espace en fonction de ladite déviation, de la composante directionnelle, et des coordonnées du point courant ;
   d/ ajout dudit quatrième point à ladite trajectoire ;
   e/ itération des sous-étapes a/ à e/ en prenant comme point courant le quatrième point déterminé tant qu'un critère de fin n'est pas respecté ;
- si la au moins une trajectoire déterminée ne comporte pas au moins le deuxième point de la contrainte de trajectoire, recommencer les étapes dudit procédé, sinon fournir la au moins une trajectoire déterminée.

Une contrainte (de trajectoires, d'entrée, de sortie, etc.) est un ensemble de conditions devant être respecté par les trajectoires déterminées. On dit que la contrainte est respectée si les conditions imposées par cette contrainte sont remplies. Par exemple, ces conditions peuvent être le passage de la trajectoire par certains points de l'espace, le respect d'une certaine courbure de la trajectoire, un nombre donné de trajectoires, etc.

La contrainte d'entrée est respectée si au moins un point de cette contrainte fait partie de la trajectoire. Le plus souvent, c'est le premier point de la trajectoire qui fait partie de la contrainte d'entrée.

La contrainte de trajectoire est respectée si au moins le point (ou les points) de cette contrainte appartiennent à une trajectoire déterminée.

La composante trigonométrique peut être par exemple une fonction oscillant régulièrement entre deux valeurs extrêmes (par exemple, la fonction Y*sin(x) oscille entre les valeurs -Y et +Y avec une fréquence de 2*Pi). Le numéro d'itération est mis à jour à chaque itération. Cette mise à jour permet d'augmenter ce numéro d'itération. Par exemple, ce numéro d'itération peut être augmenté de 1 à chaque itération ou encore de 0,1. Bien entendu, la composante trigonométrique peut également être fonction d'autres paramètres. Le nombre aléatoire peut permettre de donner un degré de liberté quant à la détermination de la déviation. Par exemple, si le nombre aléatoire est R et le nombre d'itération est k, cette déviation peut être de Y*sin(k)+R (en reprenant la fonction trigonométrique précédente). Cette déviation peut se calculer en référence à la composante directionnelle.

Avantageusement, ce procédé permet de réduire considérablement le nombre de trajectoires envisageables. Ainsi, seules les trajectoires respectant un certains nombre de conditions (de courbures, de direction, de trajectoires, etc.) sont retenues.

La détermination d'une trajectoire donnée, même si cette détermination n'est pas unique, peut permettre à des professionnels (par exemple, des géologues) d'approcher de la réalité géologique d'un terrain modélisé et d'obtenir une représentation convaincante d'un sous-sol en procédant à un nombre limité de mesures (forages, sondages, etc.).

De plus, le modèle peut comporter une pluralité de contraintes de trajectoire. Chaque contrainte de trajectoires peut alors comporter au moins un point dans l'espace de points dudit modèle. La fourniture de la trajectoire peut en outre être subordonnée au fait que la au moins une trajectoire déterminée comporte lesdits points de la pluralité de contraintes de trajectoire.

En effet, le fait d'ajouter au modèle un nombre conséquent de contraintes de trajectoire peut permettre de restreindre significativement le domaine des trajectoires pouvant être déterminées.

Ainsi, les trajectoires déterminées peuvent être plus proches de la réalité géologique du terrain réel modélisé par le modèle.

Dans un mode de réalisation particulier, le procédé peut comporter la détermination d'une pluralité de trajectoires.

En effet, il peut apparaitre dans certaines zones que la géologie ou la topographie du terrain favorise la création de multiples chenaux. Par exemple, les bras du chenal peuvent être anastomosés (comme pour la rivière Waimakariri en Nouvelle-Zélande). De plus, les chenaux peuvent présenter des points de confluence simple.

De plus, une contrainte de trajectoire peut comporter un unique point représentant un point dans un puits de forage.

Ainsi, la contrainte de trajectoire est ponctuelle (ou quasi-ponctuelle). En effet, il peut être utile de réaliser des forages pour sonder le terrain et obtenir une représentation discrète de celui-ci. Ces forages sont ainsi modélisés par des contraintes ponctuelles.

Dans un mode de réalisation particulier, une contrainte de trajectoire peut comporter une pluralité de points représentant une donnée sismique. La fourniture de la trajectoire peut être alors subordonnée au fait qu'au moins une trajectoire déterminée comporte lesdits points représentant une donnée sismique.

En réalisation des sondages par « échographie sismique » (par exemple au moyen de camions vibrateurs sismiques), il peut être possible d'obtenir une représentation des structures géologiques en profondeur grâce à l'analyse des échos d'ondes sismiques.

Sur ces représentations, il peut être possible de relever certains marqueurs typiques d'anciens chenaux et ainsi ajouter les sections de chenaux relevées comme contraintes au modèle. Typiquement, ces contraintes peuvent être des sections de courbes par lesquelles une trajectoire doit passer. Pour des raisons d'implémentation informatique, ces courbes peuvent être représentées par un ensemble de points situés à proximité. Bien entendu, la trajectoire peut suivre l'ordre des points sur la section de courbe afin de déterminer une trajectoire proche de la réalité géologique.

En complément ou en variante, le modèle peut comporter une pluralité de contraintes de trajectoire ordonnées. La fourniture de la trajectoire peut être alors subordonnée au fait que la au moins une trajectoire déterminée comporte lesdits points de la pluralité de contraintes de trajectoire, l'ordre étant respecté dans la trajectoire.

En effet, il peut être possible de déterminer que certains points de l'espace du modèle se situent en amont sur une trajectoire à déterminer par rapport à d'autres points. Ainsi, il peut être utile d'ordonner ces points et de s'assurer que ces points conservent le même ordre dans la trajectoire. Par exemple, en supposant que les trois contraintes C1, C2 et C3 ont un ordre respectif de premier, deuxième et troisième, il peut être utile de vérifier que les points P1, P2, P3 de la trajectoire correspondant à ces contraintes sont ordonnés dans le même ordre dans la trajectoire.

Dans un mode de réalisation particulier de l'invention, une puissance locale peut être associée à une trajectoire déterminée. Ainsi, la composante trigonométrique de la trajectoire peut être fonction de la valeur de puissance locale.

Cette puissance locale peut ainsi être représentative de la « capacité » du chenal à éroder son lit. Par exemple, lorsque le courant du chenal est suffisamment fort pour éroder les berges, la sinuosité naturelle peut être accentuée par la force centrifuge qui exerce une pression sur la partie extérieure de la courbe du lit du chenal.

Ainsi, cette puissance locale peut permettre de déterminer des trajectoires de chenaux proches de la réalité géologique du terrain. Cette puissance locale est par exemple associée au chenal (ou à des parties du chenal) par les géologues.

En outre, le modèle peut comporter une contrainte d'exclusion, ladite contrainte d'exclusion comprenant au moins un point de l'espace de points du modèle. La fourniture de la trajectoire peut alors être subordonnée au fait que la au moins une trajectoire déterminée ne comporte pas le au moins un point de la contrainte d'exclusion.

Par exemple, cette zone d'exclusion peut représenter une zone du terrain d'altitude élevée ou une zone présentant une roche très résistante à l'érosion. Ainsi, il peut être décidé qu'aucun lit de chenal n'est présent dans cette zone. Ainsi, cette zone d'exclusion peut permettre de déterminer des trajectoires de chenaux proches de la réalité géologique du terrain.

De même, le modèle peut comprendre une contrainte de sortie, la contrainte de sortie comprenant au moins un point de l'espace. La fourniture de la trajectoire peut alors être subordonnée au fait que la au moins une trajectoire déterminée comporte le au moins un point de la contrainte de sortie. De plus, la contrainte de fin peut comprendre que le point courant est compris dans la contrainte de sortie.

Ainsi, les trajectoires déterminées peuvent être choisies afin de satisfaire des contraintes supplémentaires comme la présence d'embouchures. Ainsi, cette contrainte de sortie peut permettre de déterminer des trajectoires de chenaux proches de la réalité géologique du terrain.

Dans un mode de réalisation particulière, chaque contrainte de trajectoire peut comporter un point d'entrée. La détermination de chaque trajectoire peut comprendre en outre :
f/ après détermination du quatrième point, déterminer un ensemble de points de l'espace accessibles depuis ledit troisième point.

L'ajout du quatrième point a ladite trajectoire peut être alors subordonné au fait que chaque point d'entrée appartient à l'union des ensembles de points accessibles, sinon ne pas tenir compte d'un nombre déterminé d'itérations précédentes dans la détermination de la au moins une trajectoire.

Cette vérification avant l'ajout du quatrième point à la trajectoire peut permettre d'éviter une détermination de trajectoires ne permettant par, de toutes les manières, de respecter les contraintes de trajectoires et/ou de sortie imposées à celles-ci. Ainsi, les déterminations de trajectoires peuvent être plus efficaces.

Un programme informatique, mettant en œuvre tout ou partie du procédé décrit ci-avant, installé sur un équipement préexistant, est en lui-même avantageux, dès lors qu'il permet de restreindre le nombre de trajectoires possibles en fonction de certaines contraintes.

Ainsi, la présente invention vise également un programme informatique comportant des instructions pour la mise en œuvre du procédé précédemment décrit, lorsque ce programme est exécuté par un processeur.

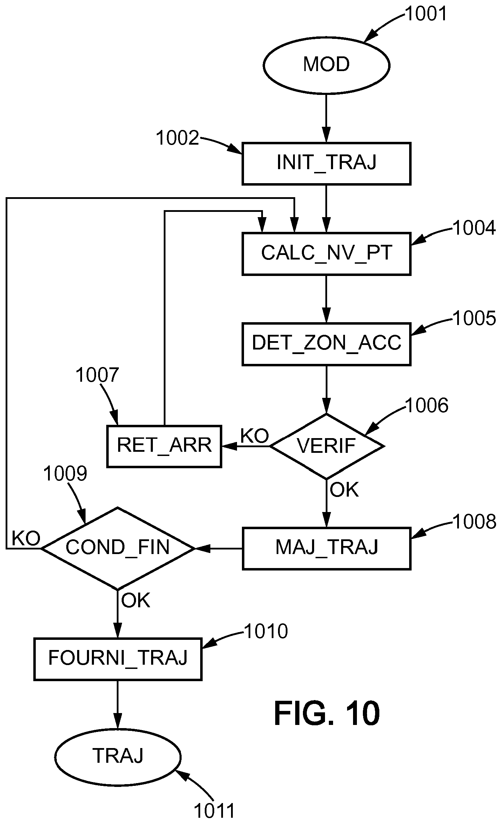

La figure 10 décrite en détails ci-après, peut former l'organigramme de l'algorithme général d'un tel programme informatique.

Un dispositif destiné à déterminer des trajectoires de chenaux peut être avantageux, en lui-même, dès lors qu'il permet de restreindre le nombre de trajectoires possibles en fonction de certaines contraintes.

Ainsi, la présente invention vise également un dispositif pour la modélisation de chenaux, le dispositif étant conformé pour mettre en œuvre les étapes du procédé décrit précédemment.

D'autres caractéristiques et avantages de l'invention apparaîtront encore à la lecture de la description qui va suivre. Celle-ci est purement illustrative et doit être lue en regard des dessins annexés sur lesquels :
- la figure 1 représente un exemple de modèle pour la détermination de trajectoires de chenaux ;
- les figures 2a, 2b et 2c représentent des trajectoires possibles de chenaux ;
- la figure 3 détaille un exemple d'itération pour un procédé de détermination de trajectoire ;
- la figure 4 illustre la détermination des points du modèle accessibles depuis un point donné du modèle ;
- la figures 5 illustre la détermination des zones dites « d'accessibilité » liée à un point donné du modèle ;
- la figure 6 représente un exemple de dispositif de détermination de trajectoire ;
- la figure 7 représente la détermination d'un ensemble de trajectoires pour un chenal se divisant en deux sous-chenaux ;
- la figure 8 est un exemple de variation possible de la composante trigonométrique le long de la trajectoire d'un chenal ;
- la figure 9 détaille un modèle tridimensionnel avec trois contraintes ponctuelles ;
- la figure 10 est un organigramme d'un procédé selon un mode de réalisation de l'invention.

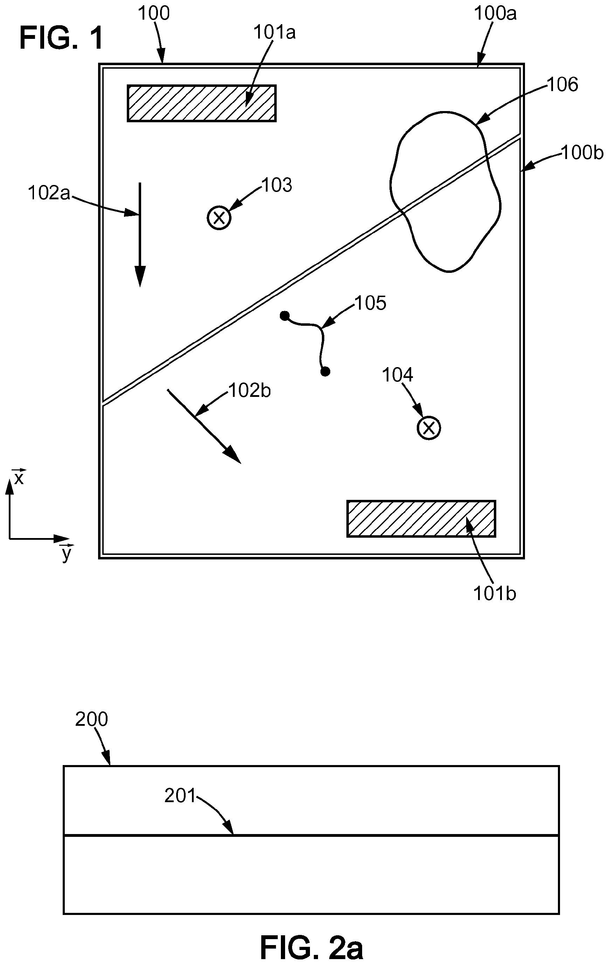

La figure 1 représente un exemple de modèle pour la détermination de trajectoires de chenaux. Dans ce mode de réalisation, le modèle comporte un espace de points 100 en deux dimensions (selon les directions x̅ et y̅ de l'espace) représentant, par exemple, un terrain géologique réel. Bien entendu, cet espace de points peut être continu ou discret. Dans le cas discret, les points de cet espace peuvent être disposés selon une grille régulière dans le plan (x̅, y̅).

De plus, ce modèle comporte de multiples contraintes (103, 104, 105) de trajectoire.

Les contraintes 103 et 104 sont des points représentant la localisation réelle de puits de sondage/forage dans le terrain. On les appelle « contraintes de puits ». Après forage de ces puits, il est établi que les deux puits (représentés par les contraintes 103 et 104) sont reliés et que le lit d'un ancien chenal a une trajectoire passant par au moins en ces deux points 103 et 104.

Pour établir que deux puits sont « reliés », il est par exemple possible de créer une forte surpression dans un des puits et de mesurer la pression induite dans un autre. En cas d'élévation de pression dans ce dernier, les puits sont considérés comme reliés. Bien entendu, la distance entre les deux puits peut être utilisée pour évaluer un seuil de surpression au-delà duquel les puits seront considérés comme reliés.

On dit que la contrainte 103 (respectivement 104) est respectée si le point de la contrainte 103 (respectivement 104) appartient à la trajectoire du chenal.

La trajectoire d'un chenal peut être définie comme étant la ligne centrale au lit du chenal. La trajectoire peut être également définie comme étant l'ensemble des points de l'espace de points compris dans le lit du chenal : dans ce dernier cas, nous parlons de trajectoire « habillée ».

La contrainte 105 est une contrainte sismique. Lors de l'étude du sous-sol d'un terrain géologique, il peut être difficile, long et coûteux de réaliser un grand nombre de forages.

Des analyses sismiques sont ainsi également réalisées. Ces analyses fournissent des images des couches géologiques permettant occasionnellement d'identifier certains méandres de chenal. Ces méandres sont identifiés sur le modèle par une courbe (105) ou par une suite ordonnée de points (définition discrète de la courbe). Ainsi, cette contrainte sismique impose à la trajectoire du chenal de suivre la courbe 105 en pénétrant par une de ses extrémités (i.e. point d'entrée de la contrainte) et en sortant par l'autre (i.e. point de sortie de la contrainte). Une des extrémités (i.e. le point d'entrée) est alors identifiée dans le modèle comme étant « en amont » de l'autre extrémité (i.e. le point de sortie) afin d'orienter la courbe.

La contrainte d'exclusion 106 est une zone de l'espace de points dans laquelle aucune trajectoire ne peut être envisagée. Par exemple, cette zone représente une zone du terrain d'altitude élevée ou une zone présentant une roche très résistante à l'érosion. Ainsi, il est décidé qu'aucun lit de chenal ne s'est formé dans cette zone.

De plus, une zone d'entrée 101a (ou « contrainte d'entrée ») et une zone de sortie 101b (ou « contrainte de sortie ») sont identifiées dans le modèle. Lors de la détermination de la trajectoire, le point initial de la trajectoire est choisi dans la zone d'entrée pour débuter celle-ci. On peut également parler de « source » du chenal. La détermination de la trajectoire prend également en compte la contrainte de sortie en s'assurant qu'un des derniers points de la trajectoire déterminée appartienne à cette zone.

Le modèle selon le mode de réalisation de la figure 1 est plan selon les axes x̅ et y̅. Pour autant, le terrain réel représenté par ce modèle n'est pas nécessairement plan. En effet, ce terrain peut présenter des déclivités, des failles, etc. Ainsi, et à des fins de simplification, le modèle « aplanit » le terrain réel. Néanmoins, pour conserver cette information, une composante directionnelle locale est ajoutée au modèle afin de rendre compte des différences de hauteur. Par exemple, dans la zone 100a, la composante directionnelle locale 102a est dirigée dans le sens -x (i.e. la zone d'entrée 101a est située dans une zone plus élevée que le point de contrainte 103). En outre, dans la zone 100b, la composante directionnelle locale 102b est dirigée dans le sens -x̅ + y̅. Bien entendu, cette composante directionnelle locale peut être fonction des coordonnées (x, y) considérées dans le plan.

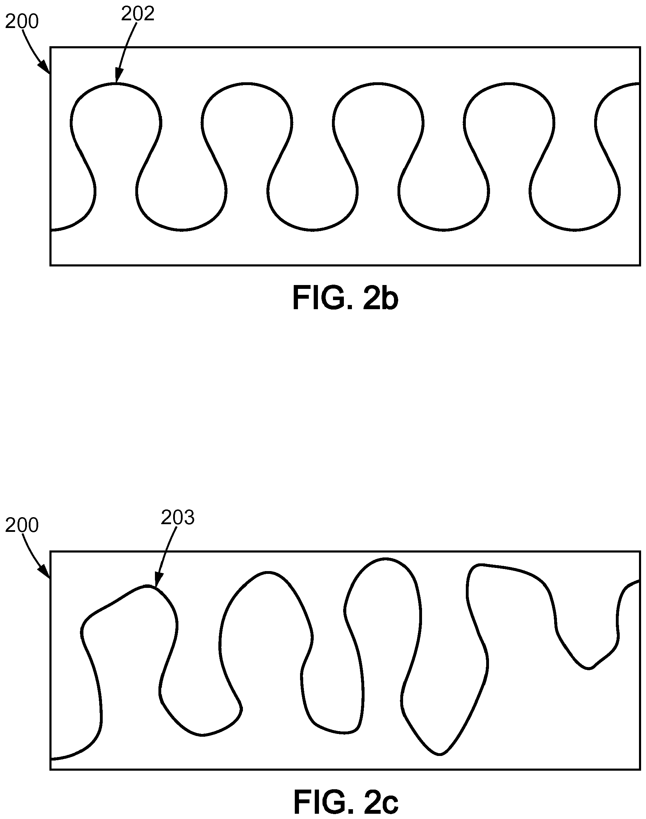

Les figures 2a, 2b et 2c représentent des trajectoires possibles de chenaux. Un chenal possède une tendance naturelle à avoir une trajectoire orientée dans le sens de la déclivité. Ainsi, il est possible de déterminer une trajectoire d'un chenal dans un modèle 200 possédant une composante directionnelle locale. La ligne 201 représentant cette trajectoire suit alors la composante directionnelle locale.

Néanmoins, il est constaté que les chenaux réels présentent des trajectoires avec des méandres. Ces méandres respectent, de manière surprenante, une certaine régularité en termes de fréquences de battement et de déviation. Ainsi, il est possible de modéliser ce méandre par l'utilisation d'une composante directionnelle locale et d'une composante trigonométrique. Cette composante trigonométrique renseigne sur l'angle formé par la trajectoire avec la composante directionnelle locale lors de déplacement unitaire dans la trajectoire. Ainsi, la composante trigonométrique peut, par exemple, être une sinusoïde présentant en abscisse la distance parcourue sur la trajectoire et en ordonnée la déviation angulaire de la trajectoire avec de la composante directionnelle locale. A titre d'illustration, la figure 2b est un exemple de trajectoire 202 obtenue avec une composante trigonométrique de la forme sinusoïdale présentant des maximums de déviation angulaire à 100° et des minimums à -100°.

De plus, une composante stochastique peut être ajoutée lors de la détermination de la trajectoire pour conférer un degré de liberté utile à la satisfaction des différentes contraintes. La courbe 203 est un exemple de trajectoire obtenue avec l'ajout d'une composante stochastique. Ainsi, trois composantes différentes participent à l'élaboration de cette courbe 203 : une composante directionnelle, une composante trigonométrique et une composante stochastique. La composante stochastique peut jouer sur la détermination de la déviation (par exemple, en tirant aléatoirement une valeur de déviation additionnelle entre -5° et +5° qui vient s'ajouter à la composante trigonométrique) ou sur le déplacement unitaire lors des itérations de détermination de la trajectoire (par exemple, en tirant aléatoirement une valeur de déplacement additionnelle entre -5% et +5% de la valeur de déplacement unitaire).

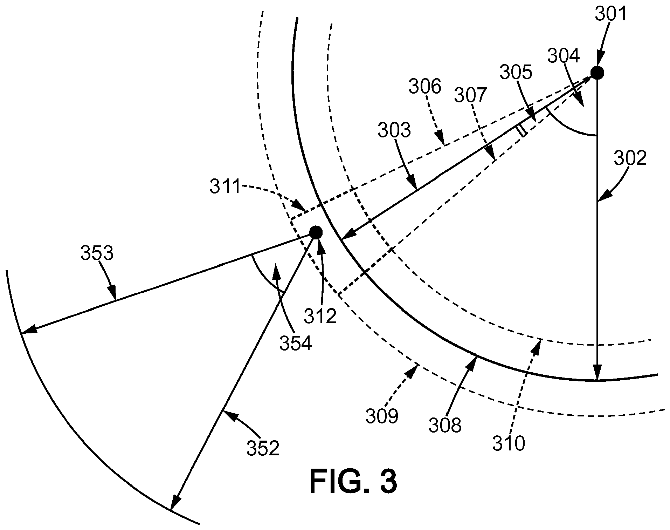

La figure 3 détaille un exemple d'itération pour un procédé de détermination de la trajectoire. A partir d'un point courant 301 de la trajectoire d'un chenal, il est possible de déterminer le point suivant de la trajectoire 312 en effectuant un procédé itératif tel que décrit ci-dessous.

En fonction des coordonnées d'un point courant 301 dans le modèle, il est déterminé la direction 302 de la composante directionnelle locale. De plus, en fonction de la distance du point courant 301 au point « source » dans la trajectoire, il est également déterminé une déviation 304 à partir de la composante trigonométrique. Cette déviation permet alors de situer le point suivant à proximité du bout de la flèche 303, cette flèche 303 ayant une longueur de déplacement unitaire. Cette longueur unitaire est petite par rapport aux dimensions du modèle (par exemple 0,5% de la plus petite dimension du modèle). Une composante stochastique est alors calculée :
- une déviation additionnelle 305 (entre -5° et +5°, par exemple), cette composante stochastique étant alors comprise entre les lignes pointillées 306 et 307 ; et/ou
- un déplacement additionnel (entre -5% et +5% de la valeur du déplacement unitaire, par exemple), cette composante stochastique étant alors comprise entre les lignes pointillées 309 et 310.

Ainsi, le point suivant 312 de la trajectoire est un point de la zone 311 délimitée par les courbes 309, 310, 306 et 307. Bien entendu, s'il n'y a pas de déplacement additionnel (respectivement pas de déviation additionnelle), la zone 311 est réduite à une section de courbe (respectivement à un segment).

Bien entendu, si le point identifié (suite au procédé décrit ci-dessus) n'est pas un point de l'espace des points du modèle (par exemple, si l'espace des points est discrétisé et que le point identifié est situé entre plusieurs points de cet espace), le point suivant 312 est alors choisi comme le point de l'espace des points le plus proche du point identifié.

Le point suivant 312 étant alors déterminé au sein de la zone 311, le procédé décrit est réitéré en identifiant la nouvelle composante directionnelle locale 352 et en déterminant une nouvelle déviation 354 associée à ce nouveau point. Le reste du procédé décrit précédemment est alors transposable à cette nouvelle itération.

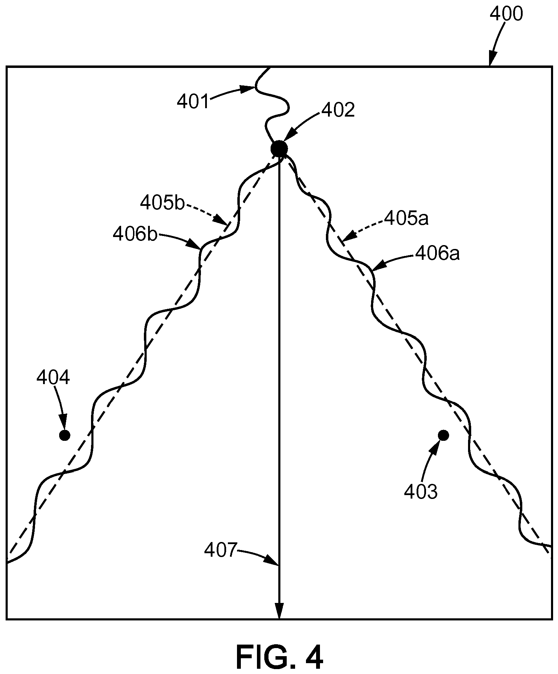

La figure 4 illustre la détermination des coordonnées accessibles depuis un point courant du modèle. En effet, il est utile de déterminer si les différentes contraintes ponctuelles (ou contraintes de puits) sont accessibles depuis le point courant. Si cela n'est pas le cas, il peut être inutile de continuer la simulation.

Dans l'espace de points 400, la détermination d'une trajectoire 401 est en cours selon la méthode présentée précédemment. Le point courant est le point 402.

En supposant que la composante trigonométrique est constante et correspond à une déviation de 0°, il apparait que l'ensemble des trajectoires possibles sont comprises entre les lignes pointillées 405a et 405b. En effet, ces lignes sont déterminées en prenant une composante stochastique extrême : soit toujours minimale (par exemple, une déviation de -5° par rapport à la composante directionnelle locale 407 orientée de haut en bas), soit toujours maximale (par exemple une déviation +5° par rapport à la composante directionnelle locale 407). Bien entendu, les lignes 405a et 405b ne sont pas nécessairement des droites. En effet, la composante directionnelle locale pouvant évoluer dans l'espace 400, l'orientation des lignes 405a et 405b peut varier.

L'utilisation d'une composante trigonométrique non constante (par exemple, une composante sinusoïdale dans la valeur varie entre +45° et - 45°) fait osciller les lignes (406a et 406b) délimitant l'ensemble des trajectoires possibles à proximité des deux lignes pointillées précédemment décrites (405a et 405b).

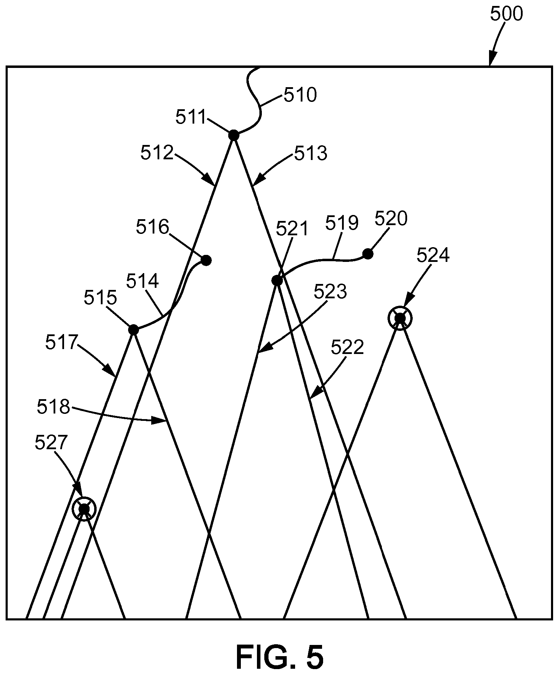

Ainsi, il est alors possible de déterminer si certains points de l'espace de points du modèle sont inaccessibles directement (voir la figure 5 pour des précisions sur la notion de « directement ») par au moins une trajectoire depuis le point courant 402 : les points situés en dehors du « cône oscillant » formé par les deux lignes 406a et 406b sont considérés comme inaccessibles directement. Ainsi, dans l'exemple présenté par la figure 4, le point 404 est inaccessible directement depuis le point courant 402 de la trajectoire, tandis que le point 403 est directement accessible.

La figure 5 illustre la détermination d'une zone d'accessibilité liée à un point courant du modèle.

Dans l'espace de points d'un modèle 500, le point courant 511 est un point de la trajectoire 510 qui est en cours de détermination. Par exemple, cette détermination est celle exposée précédemment.

En outre, ce modèle comprend quatre contraintes : deux contraintes sismiques 519 et 514, et deux contraintes de puits 524 et 527.

Les lignes 512 et 513 délimitent la zone de l'espace de points du modèle dont les points sont accessibles directement depuis le point courant 511. Il est à noter que ces lignes sont droites pour simplifier la représentation donnée par la figure 5, mais leurs formes peuvent être plus complexes, comme cela a été présenté dans la figure 4. On entend par « un point considéré est accessible directement » le fait qu'il existe une trajectoire stochastique telle que définie par la figure 3 permettant de relier le point courant et le point considéré, sans passer par des points de contraintes intermédiaires.

La contrainte sismique 514 possède deux extrémités : une de ces extrémités est un point d'entrée 516 et l'autre est un point de sortie 515. Dans l'exemple de la figure 5, le point d'entrée 516 appartient à la zone d'accessibilité directe liée au point courant 511. Ainsi, il est possible de respecter la contrainte 514, même si tous les points de la contrainte 514 ne se situent pas dans la zone d'accessibilité directe du point courant 511.

La « zone d'accessibilité directe et indirecte » (ou plus généralement appelée « zone d'accessibilité », sans plus de précision) est définie comme étant la réunion :
- de la zone d'accessibilité directe liée au point courant (comme décrite précédemment) ;
- des points des contraintes pouvant être vérifiés directement (i.e. dont le point d'entrée de la contrainte est situé dans la zone d'accessibilité directe) ;
- des zones d'accessibilité directe liées aux points de sortie des contraintes pouvant être vérifiées (directement ou indirectement) ; et
- des points des contraintes pouvant être vérifiés indirectement (i.e. dont le point d'entrée de la contrainte est situé dans la zone d'accessibilité directe d'un point de sortie d'une des contraintes).

A titre d'illustration, la contrainte sismique 514 peut être vérifiée directement, son point d'entrée 516 étant dans la zone d'accessibilité directe liée au point courant 511 (zone comprise entre les lignes 512 et 513).

La contrainte sismique 519 possède un point d'entrée 520 hors de la zone d'accessibilité directe du point courant 511. Même si cette contrainte 519 possède des points dans la zone d'accessibilité directe liée au point courant, cette contrainte ne peut pas être vérifiée.

La contrainte de puits 527 est dans la zone d'accessibilité liée au point courant 511 (même si elle ne se situe pas dans la zone d'accessibilité directe liée à ce même point 511). Etant dans la zone d'accessibilité directe liée au point de sortie 515 (zone comprise entre les lignes 517 et 518) de la contrainte 514 qui peut être vérifiée depuis le point courant 511, alors elle peut également être vérifiée (de manière indirecte).

Il en va différemment pour la contrainte 524 qui n'est pas accessible depuis le point courant 511 (directement ou indirectement). Cette contrainte 524 ne peut pas être respectée depuis le point courant 511.

Au final, la zone d'accessibilité du point courant 511 est constituée par la zone comprise entre les lignes 512 et 513, des points de la contrainte 514 et de la zone comprise entre les lignes 517 et 518.

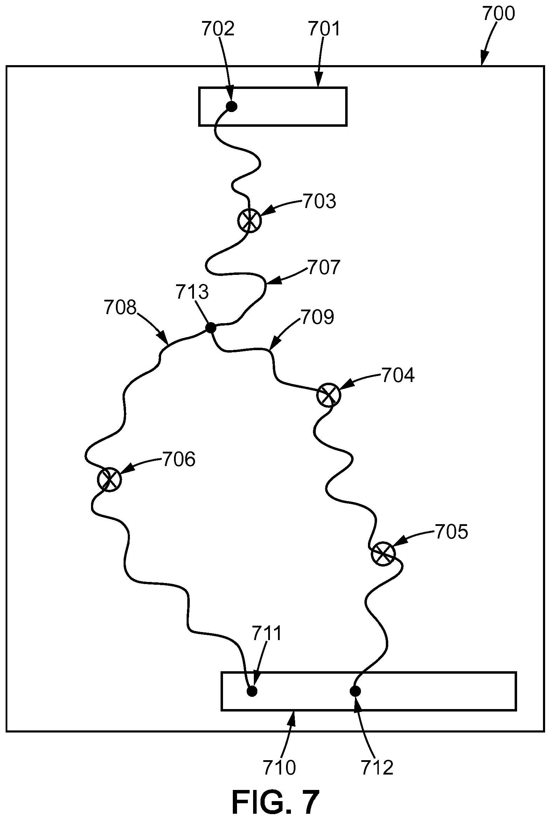

La figure 7 représente la détermination d'un ensemble de trajectoires pour un chenal se divisant en deux sous-chenaux.

Dans le modèle 700, une contrainte d'entrée 701 et un contrainte de sortie 710 sont fixées. De plus, des contraintes de puits (703, 704, 705 et 706) sont définies au sein de l'espace de points du modèle.

Il est connu qu'un chenal puisse se diviser en deux sous-chenaux à un endroit donné de sa trajectoire (ou que deux sous-chenaux donnent lieu à un chenal principal). Ainsi, la méthode de détermination de la trajectoire peut également permettre une division de la trajectoire en deux sous trajectoires. Dans l'exemple de la figure 7, on définit deux trajectoires :
- une première trajectoire formée des sections de trajectoire 707 (i.e. de point 702 au point 713) et 708 (i.e. du point 713 au point 711); et
- une deuxième trajectoire formée de la section de trajectoire 709 (i.e. du point 713 au point 712).

On dit que les trajectoires de deux chenaux ont été déterminées.

La trajectoire du premier chenal (i.e. 707 et 708) passe par les points 703 et 706. On dit que la trajectoire du premier chenal respecte/vérifie les contraintes d'un premier sous-ensemble de contraintes (ensemble formé par les contraintes 703 et 706).

La trajectoire du deuxième chenal (i.e. 709) passe par les points 704 et 705. On dit que la trajectoire du deuxième chenal respecte/vérifie les contraintes d'un deuxième sous-ensemble de contraintes (ensemble formé par les contraintes 704 et 705).

Bien entendu, les trajectoires du premier et du deuxième chenal ont une de leur extrémité (711 et 712) dans la zone 710 représentant la contrainte de sortie. Alors, il est considéré que les contraintes de trajectoire du modèle sont respectées si chacune des contraintes de trajectoire est vérifiée par au moins une trajectoire déterminée, ce qui est le cas dans l'exemple de la figure 7.

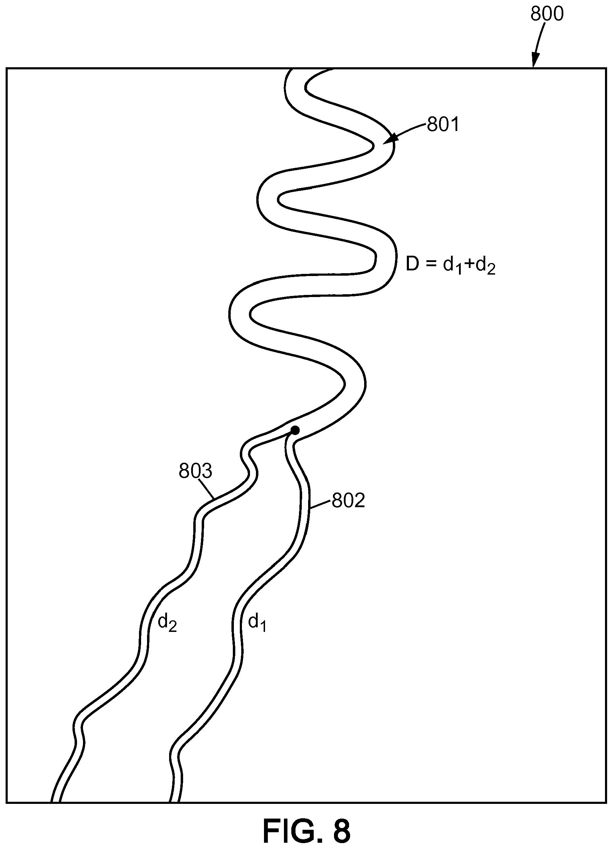

La figure 8 est un exemple de variation possible de la composante trigonométrique le long d'une trajectoire. En effet, la fréquence et l'amplitude de la composante trigonométrique peuvent évoluer le long de la trajectoire.

Cette variation peut être liée à de multiples paramètres comme la vitesse de l'eau dans le chenal dont la trajectoire est simulée, le débit du chenal dont la trajectoire est simulée, etc.

Par exemple, si la vitesse de l'eau du chenal est faible (dans la section de la trajectoire 801, chenal de type « fleuve »), le chenal a une tendance naturelle à présenter des méandres larges, amples et avec une déviation importante. En revanche, si la vitesse est importante, par exemple si la largeur du chenal diminue, (dans les sections de la trajectoire 802 et 803, chenaux de type « torrent ») les méandres sont alors moins marqués et la trajectoire est plus rectiligne.

Un méandre est une sinuosité très prononcée du cours d'un fleuve ou rivière qui se produit naturellement lorsque le courant est suffisant pour éroder les berges. Une sinuosité naturelle est accentuée par la force centrifuge qui exerce une pression sur la partie extérieure de la courbe.

On appelle alors « valeur de puissance » l'ensemble de ces paramètres permettant de déterminer la variation de la composante trigonométrique.

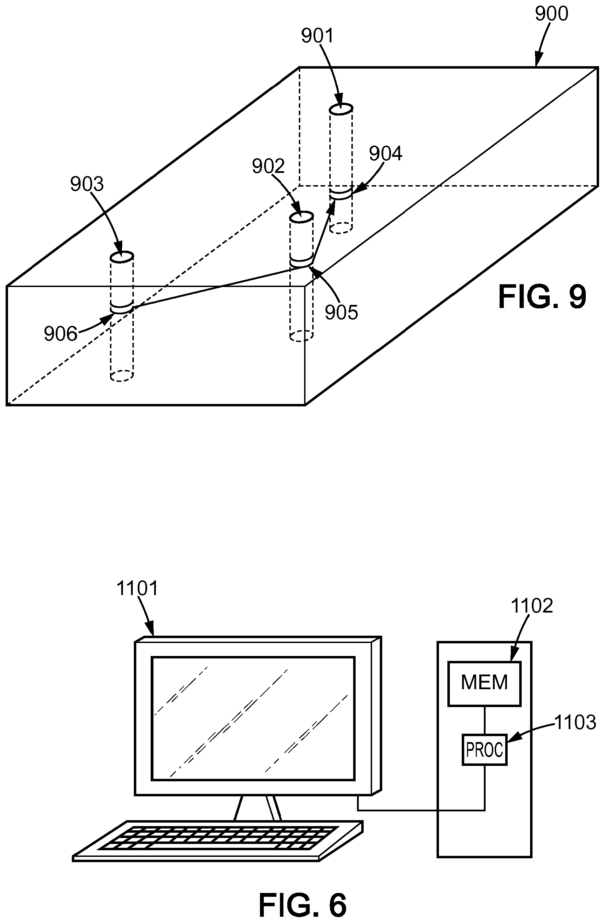

La figure 9 détaille un modèle tridimensionnel ayant des contraintes de type « puits ». En effet, à des fins de simplifications, les exemples donnés précédemment sont des exemples bidimensionnels, mais une même approche peut être réalisée avec des exemples tridimensionnels.

Dans l'exemple de la figure 9, l'espace de points du modèle 900 est un parallélépipède rectangle. Les points 901, 902, et 903 sont des représentations de l'entrée de puits de forages verticaux réalisés dans le terrain modélisé.

Les contraintes de trajectoire sont alors positionnées verticalement dans ces puits. Ainsi, les contraintes de trajectoires ont des coordonnées selon les trois directions de l'espace. La généralisation des exemples bidimensionnels précédents à des modèles tridimensionnels peut être vue, par exemple, comme l'application des procédés décrits précédemment à des projections de ces modèles tridimensionnels sur deux plans distincts (par exemple les plans (x̅, y̅) et (x̅, z̅) dans un repère orthogonales (x̅, y̅, z̅)).

La figure 10 est un organigramme d'un procédé selon un mode de réalisation de l'invention.

Dans ce mode de réalisation, un modèle 1001 est tout d'abord reçu, par exemple sous format électronique. Par exemple, le modèle est une représentation informatique compréhensible par un logiciel de simulations.

Ce modèle comporte un espace de points, une composante directionnelle locale (comme décrite précédemment) et des contraintes de trajectoire.

En outre, ce modèle1001 définit une zone d'entrée dans cet espace de points. Dans un premier temps, une trajectoire est alors initialisée (étape 1002) en choisissant aléatoirement un point dans cette zone et en définissant que cette trajectoire est composée, à ce stade, de cet unique point. Ce point est également appelé « point source du chenal ».

Dans un second temps, un nouveau point est calculé (étape 1004) en utilisant la méthode exposée précédemment (en particulier, lors de la description de la figure 3) et en prenant comme point courant le point initial.

Ensuite, une zone d'accessibilité est déterminée (étape 1005) selon la méthode exposée précédemment (en particulier, lors de la description des figures 4 et 5).

Si une contrainte de trajectoire ne peut pas être respectée par la zone d'accessibilité ainsi déterminée (vérification 1006), il est utile de revenir en arrière (étape 1007) en réitérant les étapes de détermination de la trajectoire à partir d'un point antérieur choisi de cette trajectoire. Bien entendu, les points de la trajectoire ajoutés postérieurement à ce point antérieur choisi sont supprimés de la trajectoire. Le point antérieur choisi peut être le point juste précédent au point qui vient d'être calculé à l'étape 1004 mais il peut être par exemple un point bien plus antérieur, comme un point de la dernière contrainte par laquelle la trajectoire est passée.

Si tous les points des contraintes sont compris dans la zone d'accessibilité (vérification 1006), le deuxième point est ajouté à la trajectoire (étape 1008). Les points de la trajectoire sont ordonnés car ils représentent les points successifs par lesquels il est nécessaire de passer pour décrire le cheminement du chenal dans le modèle.

Pour des raisons d'implémentation, il peut être utile de définir des conditions d'arrêts sous lesquelles la détermination de la trajectoire s'arrête. Par exemple, ces conditions peuvent être, de manière alternative ou cumulative :
- un nombre d'itération maximal ;
- un temps de détermination maximal ;
- la présence d'un point calculée dans une zone prédéterminée (ex. contrainte de sortie), etc.

Si ces conditions d'arrêts ne sont pas remplies (vérification 1009), les étapes 1004, 1005, 1007, 1008 sont réitérées en prenant pour point courant le point nouvellement calculé. Dans le cas contraire, la trajectoire 1011 ainsi déterminée est retournée (étape 1010). Ce retour peut être réalisé sous format informatique afin de permettre, par exemple, une visualisation des courbes des chenaux ou une simulation ultérieure.

En outre, l'étape 1004 peut aléatoirement prévoir la création d'une nouvelle trajectoire à partir du point courant. Cette nouvelle trajectoire est alors déterminée de manière indépendante à l'aide du procédé exposé ci-dessus. Préalablement, les contraintes peuvent être reparties en deux sous-ensembles, le premier sous-ensemble devant être respecté par la première trajectoire, le deuxième sous-ensemble devant être respecté par la nouvelle trajectoire.

Par ailleurs, le schéma fonctionnel présenté sur la figure 10 est un exemple typique d'un programme dont certaines instructions peuvent être réalisées auprès de l'équipement de détermination de trajectoires. A ce titre, la figure 10 peut correspondre à l'organigramme de l'algorithme général d'un programme informatique au sens de l'invention.

La figure 6 représente un exemple de dispositif de détermination de trajectoires 1101. Dans ce mode de réalisation, le dispositif comporte un ordinateur 1101, comprenant une mémoire 1102 pour stocker le modèle et la trajectoire, et des moyens de traitement, par exemple un processeur 1103 pour effectuer les déterminations de trajectoires selon le procédé décrit précédemment.

Bien entendu, la présente invention ne se limite pas aux formes de réalisation décrites ci-avant à titre d'exemples ; elle s'étend à d'autres variantes.

D'autres réalisations sont possibles.

## Revendications

1. Procédé mis en œuvre par ordinateur pour la modélisation de chenaux, à partir d'un modèle (100) comportant au moins :
- un espace de points, lesdits points ayant des coordonnées dans ledit espace,
- une contrainte d'entrée (101a) comportant au moins un premier point dudit espace,
- au moins une contrainte de trajectoire (103, 105, 104) comportant au moins un deuxième point dans ledit espace non compris dans la contrainte d'entrée (101a), et
- une composante directionnelle locale (102a, 102b) étant fonction des coordonnées dans l'espace, ladite composante directionnelle prenant en compte les différences de hauteur du terrain réel;
dans lequel le procédé comporte les étapes :
- déterminer un troisième point parmi l'au moins un premier point de la contrainte d'entrée (101a), ledit troisième point étant pris comme point courant,
- initialiser une composante trigonométrique et un numéro d'itération, ladite composante trigonométrique étant au moins fonction dudit numéro d'itération,
- déterminer au moins une trajectoire (707, 708, 709) dans ledit espace, ladite détermination est réalisée par itération des sous-étapes suivantes :
a/ tirage d'un nombre aléatoire et incrémentation du numéro d'itération ;
b/ détermination d'une déviation (304) en fonction de la composante trigonométrique et du nombre aléatoire tiré ;
c/ détermination d'un quatrième point de l'espace (312) en fonction de ladite déviation (304),
de la composante directionnelle (302), et des coordonnées du point courant (301) ;
d/ ajout dudit quatrième point à ladite trajectoire ;
e/ itération des sous-étapes a/ à e/ en prenant comme point courant le quatrième point déterminé tant qu'un critère de fin n'est pas respecté ;
- si la au moins une trajectoire déterminée ne comporte pas au moins le deuxième point de la contrainte de trajectoire, recommencer les étapes dudit procédé, sinon fournir la au moins une trajectoire déterminée.

2. Procédé selon la revendication 1, le modèle comportant une pluralité de contraintes de trajectoire (103, 105, 104), chaque contrainte de trajectoires comportant au moins un point dans l'espace de points dudit modèle,
dans lequel la fourniture de la trajectoire est subordonnée en outre au fait que la au moins une trajectoire déterminée comporte lesdits points de la pluralité de contraintes de trajectoire.

3. Procédé selon l'une des revendications précédentes, dans lequel le procédé comporte la détermination d'une pluralité de trajectoires.

4. Procédé selon l'une des revendications précédentes, dans lequel une contrainte de trajectoire comporte un unique point (906) représentant un point dans un puits de forage (903).

5. Procédé selon l'une des revendications précédentes, dans lequel une contrainte de trajectoire comporte une pluralité de points représentant une donnée sismique (105),
et dans lequel la fourniture de la trajectoire est subordonnée en outre au fait qu'au moins une trajectoire déterminée comporte lesdits points représentant une donnée sismique.

6. Procédé selon l'une des revendications précédentes, dans lequel le modèle comporte une pluralité de contraintes de trajectoire ordonnées,
et dans lequel la fourniture de la trajectoire est subordonnée en outre au fait que la au moins une trajectoire déterminée comporte lesdits points de la pluralité de contraintes de trajectoire, l'ordre étant respecté dans la trajectoire.

7. Procédé selon l'une des revendications précédentes, dans lequel, une puissance locale étant associée à une trajectoire déterminée, la composante trigonométrique de la trajectoire est fonction de la valeur de puissance locale.

8. Procédé selon l'une des revendications précédentes, dans lequel le modèle comporte, en outre, une contrainte d'exclusion, ladite contrainte d'exclusion comprenant au moins un point de l'espace de points du modèle,
et dans lequel la fourniture de la trajectoire est subordonnée en outre au fait que la au moins une trajectoire déterminée ne comporte pas le au moins un point de la contrainte d'exclusion.

9. Procédé selon l'une des revendications précédentes, dans lequel le modèle comprend en outre une contrainte de sortie, la contrainte de sortie comprenant au moins un point de l'espace,
dans lequel la fourniture de la trajectoire est subordonnée en outre au fait que la au moins une trajectoire déterminée comporte le au moins un point de la contrainte de sortie
et dans lequel la contrainte de fin comprend que le point courant est compris dans la contrainte de sortie.

10. Procédé selon l'une des revendications précédentes, dans lequel chaque contrainte de trajectoire comporte un point d'entrée,
dans lequel, la détermination de chaque trajectoire comprend en outre :
f/ après détermination du quatrième point, déterminer un ensemble de points de l'espace accessibles depuis ledit point courant,
et dans lequel l'ajout du quatrième point à ladite trajectoire est
subordonné au fait que chaque point d'entrée appartient à l'union des ensembles de points accessibles, sinon ne pas tenir compte d'un nombre déterminé d'itération précédente dans la détermination de la au moins une trajectoire.

11. Produit programme informatique comportant des instructions pour la mise en œuvre du procédé selon l'une des revendications 1 à 10, lorsque ce programme est exécuté par un processeur.

12. Dispositif pour la modélisation de chenaux, ledit dispositif étant conformé pour mettre en œuvre les étapes du procédé selon l'une des revendications 1 à 10.

## Patentansprüche

1. Computerimplementiertes Verfahren zur Modellierung von Kanälen ausgehend von einem Modell (100), das mindestens aufweist:
- einen Raum von Punkten (Punkteraum), wobei die Punkte Koordinaten in dem Raum haben,
- eine Eintrittsbedingung (101a), die mindestens einen ersten Punkt des Raums aufweist,
- mindestens eine Trajektoriebedingung (103, 105, 104), die mindestens einen zweiten Punkt in dem Raum aufweist, der nicht in der Eintrittsbedingung (101a) enthalten ist, und
- eine lokale Richtungskomponente (102a, 102b), die Funktion der Koordinaten in dem Raum ist, wobei die Richtungskomponente die Höhenunterschiede des realen Geländes berücksichtigt;
wobei das Verfahren die folgenden Schritte aufweist:
- Bestimmen eines dritten Punkts unter dem mindestens einen ersten Punkt der Eintrittsbedingung (101a), wobei der dritte Punkt als laufender Punkt genommen wird,
- Initialisieren einer trigonometrischen Komponente und einer Iterationsnummer, wobei die trigonometrische Komponente zumindest Funktion der Iterationsnummer ist,
- Bestimmen mindestens einer Trajektorie (707, 708, 709) in dem Raum, wobei die Bestimmung durch Iteration der folgenden Teilschritte erfolgt:
a/ Ziehen einer Zufallszahl und Erhöhen der Iterationsnummer;
b/ Bestimmen einer Abweichung (304) als Funktion der trigonometrischen Komponente und der gezogenen Zufallszahl;
c/ Bestimmen eines vierten Punkts des Raums (312) als Funktion der Abweichung (304), der Richtungskomponente (302) und der Koordinaten des laufenden Punkts (301);
d/ Hinzufügen des vierten Punkts zu der Trajektorie;
e/ Iteration der Teilschritte a/ bis e/ unter Verwendung des bestimmten vierten Punkts als laufenden Punkt solange ein Endkriterium noch nicht erfüllt ist;
- falls die mindestens eine bestimmte Trajektorie nicht mindestens den zweiten Punkt der Trajektoriebedingung aufweist, erneutes Beginnen der Schritte des Verfahrens, anderenfalls Bereitstellen der mindestens einen bestimmten Trajektorie.

2. Verfahren nach Anspruch 1, wobei das Modell mehrere Trajektoriebedingungen (103, 105, 104) aufweist, wobei jede Trajektoriebedingung mindestens einen Punkt in dem Punkteraum des Modells aufweist,
in welchem die Bereitstellung der Trajektorie ferner der Tatsache untergeordnet ist, dass die mindestens eine bestimmte Trajektorie die Punkte der mehreren Trajektorienbedingungen aufweist.

3. Verfahren nach einem der vorstehenden Ansprüche, in welchem das Verfahren die Bestimmung von mehreren Trajektorien aufweist.

4. Verfahren nach einem der vorstehenden Ansprüche, in welchem eine Trajektoriebedingung einen einzelnen Punkt (906) aufweist, der einen Punkt in einem Bohrungsschacht (903) repräsentiert.

5. Verfahren nach einem der vorstehenden Ansprüche, in welchem eine Trajektoriebedingung mehrere Punkte aufweist, die eine seismische Information (105) repräsentieren,
und in welchem die Bereitstellung der Trajektorie ferner der Tatsache untergeordnet ist, dass mindestens eine bestimmte Trajektorie die Punkte, die eine seismische Information repräsentieren, aufweist.

6. Verfahren nach einem der vorstehenden Ansprüche, in welchem das Modell mehrere geordnete Trajektoriebedingungen aufweist,
und in welchem die Bereitstellung der Trajektorie ferner der Tatsache untergeordnet ist, dass die mindestens eine bestimmte Trajektorie die Punkte der mehreren Trajektoriebedingungen aufweist, wobei die Reihenfolge in der Trajektorie eingehalten wird.

7. Verfahren nach einem der vorstehenden Ansprüche, in welchem, wenn eine lokale Kraft mit einer bestimmten Trajektorie verknüpft ist, die trigonometrische Komponente der Trajektorie Funktion des Werts der lokalen Kraft ist.

8. Verfahren nach einem der vorstehenden Ansprüche, in welchem das Modell ferner eine Ausschließungsbedingung aufweist, wobei die Ausschließungsbedingung mindestens einen Punkt des Punkteraums des Modells aufweist,
und in welchem die Bereitstellung der Trajektorie ferner der Tatsache untergeordnet ist, dass die mindestens eine bestimmte Trajektorie den mindestens einen Punkt der Ausschließungsbedingung nicht aufweist.

9. Verfahren nach einem der vorstehenden Ansprüche, in welchem das Modell ferner eine Austrittsbedingung aufweist, wobei die Austrittsbedingung mindestens einen Punkt des Raums aufweist,
in welchem die Bereitstellung der Trajektorie ferner der Tatsache untergeordnet ist, dass die mindestens eine bestimmte Trajektorie den mindestens einen Punkt der Austrittsbedingung aufweist, und in welchem die Endbedingung aufweist, dass der laufende Punkt in der Austrittsbedingung enthalten ist.

10. Verfahren nach einem der vorstehenden Ansprüche, in welchem jede Trajektoriebedingung einen Eintrittspunkt aufweist,
in welchem die Bestimmung jeder Trajektorie ferner aufweist:
f/ nach Bestimmung des vierten Punkts, Bestimmen einer Menge von Punkten des Raums, die von dem laufenden Punkt aus zugänglich sind, und in welchem das Hinzufügen des vierten Punkts zu der Trajektorie der Tatsache untergeordnet ist, dass jeder Eintrittspunkt zu der Vereinigung der Mengen von zugänglichen Punkten gehört, anderenfalls Nichtberücksichtigen einer bestimmten Iterationszahl einer vorherigen Iteration in der Bestimmung der mindestens einen Trajektorie.

11. Computerprogrammprodukt aufweisend Befehle zur Durchführung des Verfahrens nach einem der Ansprüche 1 bis 10, wenn dieses Programm von einem Prozessor abgearbeitet wird.

12. Vorrichtung zur Modellierung von Kanälen, wobei die Vorrichtung zur Durchführung der Schritte des Verfahrens nach einem der Ansprüche 1 bis 10 eingerichtet ist.

## Claims

1. A method implemented by computer for the modeling of channels, on the basis of a model (100) comprising at least:
- a space of points, said points having coordinates in said space,
- an entry constraint (101a) comprising at least one first point of said space,
- at least one trajectory constraint (103, 105, 104) comprising at least one second point in said space not included in the entry constraint (101a), and
- a local directional component (102a, 102b) being dependent on the coordinates in the space, said directional component taking into account the differences in height of the real terrain;
in which the method comprises the steps of:
- determining a third point from among the at least one first point of the entry constraint (101a), said third point being taken as current point,
- initializing a trigonometric component and an iteration number, said trigonometric component being at least dependent on said iteration number,
- determining at least one trajectory (707, 708, 709) in said space, said determination is carried out by iteration of the following sub-steps:
a/ drawing of a random number and incrementation of the iteration number;
b/ determination of a deviation (304) as a function of the trigonometric component and of the random number drawn;
c/ determination of a fourth point of the space (312) as a function of said deviation (304), of the directional component (302), and of the coordinates of the current point (301);
d/ addition of said fourth point to said trajectory;
e/ iteration of the sub-steps a/ to e/ while taking the fourth determined point as current point as long as an end criterion is not complied with;
- if the at least one determined trajectory does not comprise at least the second point of the trajectory constraint, recommencing the steps of said method, otherwise providing the at least one determined trajectory.

2. The method as claimed in claim 1, the model comprising a plurality of trajectory constraints (103, 105, 104), each trajectory constraint comprising at least one point in the space of points of said model,
in which the provision of the trajectory is subordinated furthermore to the fact that the at least one determined trajectory comprises said points of the plurality of trajectory constraints.

3. The method as claimed in one of the preceding claims, in which the method comprises the determination of a plurality of trajectories.

4. The method as claimed in one of the preceding claims, in which a trajectory constraint comprises a single point (906) representing a point in a drilling well (903).

5. The method as claimed in one of the preceding claims, in which a trajectory constraint comprises a plurality of points representing a seismic datum (105),
and in which the provision of the trajectory is subordinated furthermore to the fact that at least one determined trajectory comprises said points representing a seismic datum.

6. The method as claimed in one of the preceding claims, in which the model comprises a plurality of ordered trajectory constraints,
and in which the provision of the trajectory is subordinated furthermore to the fact that the at least one determined trajectory comprises said points of the plurality of trajectory constraints, the order being complied with in the trajectory.

7. The method as claimed in one of the preceding claims, in which, a local power being associated with a determined trajectory, the trigonometric component of the trajectory is dependent on the local power value.

8. The method as claimed in one of the preceding claims, in which the model comprises, furthermore, an exclusion constraint, said exclusion constraint comprising at least one point of the space of points of the model,
and in which the provision of the trajectory is subordinated furthermore to the fact that the at least one determined trajectory does not comprise the at least one point of the exclusion constraint.

9. The method as claimed in one of the preceding claims, in which the model furthermore comprises an exit constraint, the exit constraint comprising at least one point of the space,
in which the provision of the trajectory is subordinated furthermore to the fact that the at least one determined trajectory comprises the at least one point of the exit constraint
and in which the end constraint comprises that the current point lies in the exit constraint.

10. The method as claimed in one of the preceding claims, in which each trajectory constraint comprises an entry point,
in which the determination of each trajectory furthermore comprises:
f/ after determination of the fourth point, determining a set of points of the space which are accessible from said current point,
and in which the addition of the fourth point to said trajectory is subordinated to the fact that each entry point belongs to the union of the sets of accessible points, otherwise taking no account of a determined number of previous iteration in the determination of the at least one trajectory.

11. A computational program product comprising instructions for the implementation of the method as claimed in one of claims 1 to 10, when this program is executed by a processor.

12. A device for the modeling of channels, said device being devised to implement the steps of the method as claimed in one of claims 1 to 10.
